# EUROPÄISCHE PATENTSCHRIFT

(11) **EP 0 692 359 B1**
(45) Veröffentlichungstag und Bekanntmachung des Hinweises auf die Patenterteilung: **08.09.1999**
(21) Anmeldenummer: 95108706.3
(22) Anmeldetag: 07.06.1995
(51) Int. Cl.: B29C 45/16

(54) **Vorrichtung zum Spritzgiessen im Sandwich-Verfahren**
Apparatus for sandwich injection moulding
Dispositif pour mouler par injection par le procédé sandwich

(30) Priorität: 11.07.1994 US 272483
(43) Veröffentlichungstag der Anmeldung: 17.01.1996
(60) Teilanmeldung: 99104452.0
(73) Patentinhaber: Ferromatik Milacron Maschinenbau GmbH, D-79364 Malterdingen (DE)
(72) Erfinder: Jaroschek, Christoph, Dr., D-79346 Endingen (DE); Steger, Reinhard, D-79108 Freiburg (DE); Gehring, Alexander, D-79353 Bahlingen (DE); Bourdon, Karlheinz, Dr., D-79276 Reute (DE)
(74) Vertreter: Röther, Peter, Dipl.-Phys.

(56) Entgegenhaltungen:
- EP-A- 0 287 001
- FR-A- 2 204 499
- KUNSTSTOFFE, Bd. 83, Nr. 7, 1.Juli 1993 MÜNCHEN,DE, Seiten 519-521, XP 000372680 JAROSCHEK C 'NEUE WEGE BEIM SANDWICH-SPRITZGIESSEN '

## Beschreibung

Die vorliegende Erfindung betrifft Spritzgießmaschinen und insbesondere Spritzgieß-Vorrichtungen zur Herstellung von mehrschichtigen Kunststoff-Artikeln mit einer Sandwich-Schichtkonfiguration.

### Stand der Technik

Das Sandwich-Spritzgießverfahren erlaubt die Herstellung von Kunststoffartikeln, deren Querschnitt eine drei-schichtige Konfiguration aufweist. Das äußere "Haut"-Material ist dabei das eine Material und die innere "Kern"-Struktur besteht aus einem anderen Material. Diese Konstruktion ist oft für dickwandige Komponenten benutzt worden, deren Kerne aus geschäumten Material bestehen, sowie in Anwendung, bei denen ein preiswertes Material für den Kern eines Artikels (als Ersatz für ein teueres Material) gebraucht werden kann, der spezieller Eigenschaften an der Oberfläche bedarf.

In letzter Zeit ist eine gestiegene Wertlegung auf Recycling festzustellen, die viele Spritzgießer veranlaßt hat, nach Wegen zur Verwendung von recycliertem Material zu suchen.

Das Sandwich-Spritzgieß-Verfahren kann in der Tat Recycling-Material als Kern-Material verwenden, da es noch adäquate physikalische Eigenschaften besitzt. Diese Konstruktion erhält ihren Vorteil durch die Tatsache, daß das äußere (Haut) Material relativ dünn ist, wodurch die Kosten des Spritzgieß-Artikels reduziert werden und der Anteil an jungfräulichem Material minimiert werden kann.

Vom Materialverarbeitungs-Gesichtspunkt wird die Sandwich-Konfiguration erreicht, wenn die beiden Materialien nacheinander in die Formkavität gefördert werden. Wenn die Materialien unter laminaren Fließbedingungen eingespritzt werden, beginnt die eingespritzte Schmelze unverzüglich zu verfestigen, wenn sie in Kontakt mit der Formwerkzeugwand gekommen ist, so daß die Schmelze in der Mitte der Strömung schneller vorwärts schreitet als die Schmelze in der Nähe der Wand.

Somit ersetzt Material, das später eingespritzt wird, Material, das früher eingespritzt worden ist, insbesondere in der Mitte des Fließquerschnitts, während die Schmelze, die die kalte Formwand berührt, zur Artikelform aushärtet und die Oberflächenschicht des Teils bleibt. Wenn der nachfolgende Schmelzestrom ein zweites Material aufweist, ist die Sandwich-oder Drei-Schicht-Konfiguration geschaffen.

Wegen des Erfordernisses der laminaren Strömung ist es nicht möglich, eine Sandwich-Konfiguration im Spritzgießverfahren herzustellen, in welcher beide Schmelzen zur selben Zeit in die Kavität eingebracht werden.

Simultane Einspritzung würde zu einer unakzeptablen Oberfläche führen, da das Kernmaterial die Wände der Formkavität berühren und sich mit dem Haut-Material der Oberfläche des SpritzgießArtikels vermischen würde. Um eine saubere Oberflächenschicht zu gewährleisten, wird das Haut-Material bei der Sandwich-Spritzgieß-Methode immer zuerst eingespritzt; dann folgt das Kern-Material mit kurzer zeitlicher Verzögerung. Die Einspritzüberlappung der beiden Materialien ist notwendig, um zu verhindern, daß die Schmelzefließfront augenblicklich stoppt, was zu Oberflächenfehlern ( sogenannten Bindenähten ) führen würde.

Bei diesem Typ der zeitlichen Abfolge ist es unerheblich, ob die Schmelzen in einer konzentrischen oder parallelen Düse zusammengeführt werden. In jedem Fall muß trotzdem das zweite (Kern-) Material der nachfolgende Schmelzestrom sein, der durch den Strömungsquerschnitt des zuerst eingespritzten Materials fließt, um die Sandwich-Konfiguration zu erreichen.

Typischerweise weisen die zur Herstellung der Sandwich-Konfiguration konzipierten Spritzgieß-Maschinen zwei Einspritz-Einheiten auf, die so gesteuert sind, daß die jeweiligen Materialkomponenten in der gewünschten Zeitabfolge in die Formkavität eingespritzt werden. Maschinen dieses Typs weisen Nachteile wie die hohen Anfangskosten der benötigten Komponenten sowie die damit einhergehende Steuerungsfähigkeit für die gesamte Operationsüberwachung auf, um zu gewährleisten, daß der Volumenstrom des Materials durch die Düse in die Kavität konstant ist, wenn von Haut- zu Kern-Material gewechselt wird. In jüngster Zeit wurde entdeckt, daß das Sandwich-Molding-Verfahren nicht notwendigerweise erfordert, daß die beiden Schmelzen zu verschiedenen Zeiten mit Hilfe separater Einspritzzylinder eingespritzt werden müssen. Es ist auch möglich, die Schmelzen in einem einzigen Zylinder zu schichten und dann diese "gestapelte" Schmelze in einem einzigen Injektionsvorgang (Schuß) in die Kavität einzuspritzen. Eine Vorrichtung zur Durchführung dieses Verfahrens ist aus dem Artikel aus "Kunststoffe", Bd. 83, Nr. 7, 1. Juli 1993 MÜHCHEN, Seiten 519 - 521, Jaroschek, C "Neue Wege beim Sandwich-Spritzgiessen" bekannt.

Das hiermit geführte Verfahren des Sandwich-Molding hat den Vorteil, daß es erlaubt, den Einspritzprozeß in derselben Weise durchzuführen wie beim Standard-Spritzgieß-Verfahren (mit nur einem Material). Nachteilig hierbei ist jedoch der konstruktive Aufwand, da eine zusätzliche Heißkanal-Zwischenplatte vorgesehen sein muß, in der ein Dreiwegeventil vorgesehen ist sowie ein relativ langer Heißkanal.

Die Aufgabe der vorliegenden Erfindung ist darin zu sehen, eine Vorrichtung von vereinfachter und ökonomischer Bauart anzugeben, die in der Lage ist, Artikel im Sandwich-Spritzgieß-Verfahren herzustellen und einen alternativen Weg zum Speisen des Haut-Materials in die Haupt-Einspritz-Einheit zu finden.

Die Erfindung löst diese Aufgabe gemäß dem kennzeichnenden Teil des Patentanspruchs 1 dadurch, daß Mittel zur alternativen Positionierung des Heißkanalverteilers zwischen einer ersten Position, in der der Heißkanalverteiler mit der Hauptspritzeinheit verbunden ist und einer zweiten Position, in der der Heißkanalverteiler aus dem Mündungsbereich der Haupt-Einspritzeinheit herausbewegt ist, vorgesehen sind.

Die Vorrichtung zur Durchführung des Mono-Spritzgieß-Verfahrens soll typischerweise eine Standard-Spritzgießmaschine mit einer Haupt-Einspritz-Einheit aufweisen, die Kunststoffschmelze von einer oder mehreren zusätzlichen Plastifizier-Einheit(en) erhält. Die Übergabe dies Haut- und Kern-Materials in die Haupt-Einspritz-Einheit erfolgt gesteuert, um einen vollständigen Schuß der beiden geschichteten Materialien in den gewünschten Proportionen zu erreichen. Für dieses Verfahren kann die zusätzliche Plastifizier-Einheit ein nicht hin- und herbeweglicher Schneckenextruder sein, welcher mit einer eine hin- und herbewegliche Einspritzschnecke aufweisenden Hauptspritz-Einheit verbunden ist.

Alternativ könnte die zusätzliche Einheit ( Hilfseinheit ) eine zweite hin- und herbewegliche Einspritzschnecke sein, wobei die Schnecke in üblicher Weise arbeitet, um Material in die Haupt-Einspritz-Einheit zu transportieren; oder zwei Extruder, die einen Einspritzsammelraum beschicken.

In der bevorzugten Ausführungsform wird das Haut-Material von einem nicht hin- und herbewegbaren Schneckenextruder durch einen Heißkanalverteiler direkt in die Düse/Schneckenzylinder der Einspritzeinheit der Maschine gefördert. Der Heißkanalverteiler ist direkt mit dem Extrudermundstück verbunden, wo er im wesentlichen eine Verlängerung des Extrusionszylinders bildet.

Die Vorbereitung für den Einspritzvorgang beginnt mit dem Zurückziehen der Einspritzeinheit vom Formwerkzeug weg, nachdem der vorherige Einspritzzyklus beendet ist. Insbesondere wird die Einheit ausreichend weit zurückgezogen, um die Verbindung mit dem Heißkanalverteiler des Extruders zu erlauben.

Der Heißkanalverteiler wird zusammen mit dem Extruder in Position gebracht, um schließlich eine flüssigkeitsdichte Verbindung mit der Düse der Einspritzeinheit zu erreichen.

Um einen vollen Schuß des Haut- und Kern-Materials zum Sandwich-Spritzgießen eines Artikels aufzubauen, fördert der Extruder das plastifizierte Haut-Material durch den Heißkanal in den Zylinder der Einspritzeinheit, wobei es die Einspritzdüse der Einheit passiert. Die Einspritzeinheit wird dann von dem Heißkanal getrennt, der Heißkanal wird (mit dem Extruder) von der Einspritzeinheit weg bewegt und die Einspritzeinheit bewegt sich zurück in die Position zum Einspritzen in die Form. Simultan mit der Bewegung der Komponenten, nachdem das Haut-Material übergeben worden ist, plastifiziert die Einspritz-Einheit genügend Kern-Material, um das geschichtete Arrangement von Haut- und Kern-Material in der für das Sandwich-Molding notwendigen Menge zu vervollständigen. Abhängig von der Gestalt der Einheit und des für die Maschine zur Verfügung stehenden Arbeitsraumes, kann der Extruder für die Sandwich-Molding-Vorrichtung vertikal angeordnet sein (90° zur Einspritzeinheit, wie es der Anspruch 2 vorsieht), so daß der Heißkanal ebenfalls vertikal bewegt wird, um die Verbindung mit der Einspritz-Einheit herzustellen.

Alternativ kann der Extruder aber auch derart orientiert sein, daß er in eine Position gedreht ist, die annähernd parallel zur Einspritzung ist, wobei der Heißkanalverteiler entsprechend vor der Einspritz-Einheit positioniert ist, wenn die Einheit zurückgezogen ist, damit der Materialtransfer eingeleitet werden kann (Anspruch 3).

Bei einer vorteilhaften Weiterbildung der Erfindung gemäß den Ansprüchen 4 bis 6 weist die Sandwich-Molding-Vorrichtung Speichermittel zur Förderung einer bestimmten Menge des Haut-Materials in die Form auf, sowie zur Ausführung der Pack- und Haltefunktionen des Einspritzzyklus. Insbesondere ist der als Speichermittel dienende Speicherraum über ein geeignetes Ventil mit dem Extruder verbunden, so daß eine bestimmte Menge des Haut-Materials sofort dann in den Speicherraum gefördert wird, wenn die erste Menge des Haut-Materials in den Schneckenzylinder der Einspritz-Einheit gefördert worden ist. Sobald das Ventil schaltet, um den Speicherraum zu füllen, beginnt die Einspritzeinheit die gewünschte Menge des Kernmaterials zu plastifizieren. Der Speicherraum ist mit Hilfe geeigneter Mittel mit dem Einspritzkanal der Formkavität verbunden, so daß nachdem die Einspritzeinheit die Formkavität mit der ersten Ladung gefüllt hat, der Speicherraum eine kleine Menge von Haut-Material fördern kann, um sicherzustellen, daß das Kern-Material vollständig vom Haut-Material umschlossen ist und daß die Kavität vollständig gefüllt ist. Das angeschlossene Ventil erlaubt darüberhinaus, daß der Speicherraum (Akkumulator) den gewünschten Druck auf das Material der Form aufrechterhält, während gleichzeitig die Einspritzeinheit in die Lage versetzt wird, Haut-Material vom Extruder für den nächsten Einspritzzyklus zu erhalten.

Die Erfindung wird im folgenden anhand von Zeichnen dargestellt und erläutert.

Es zeigen:
- Fig. 1 a-c:: schematisch in Seitenansicht ( teilweise im Schnitt ) eine Spritzgießvorrichtung gemäß der vorliegenden Erfindung mit einer Haupt-Einspritzeinheit und einer vertikal angeordneten zusätzlichen Plastifiziereinheit in verschiedenen Verfahrenszuständen,
- Fig. 2 a-c:: zeigt wie Figur 1 eine erfindungsgemäße Vorrichtung, wobei bei dieser Ausführungsform die zusätzliche Plastifiziereinheit eine andere Orientierung aufweist als in der Darstellung gemäß Fig. 1.

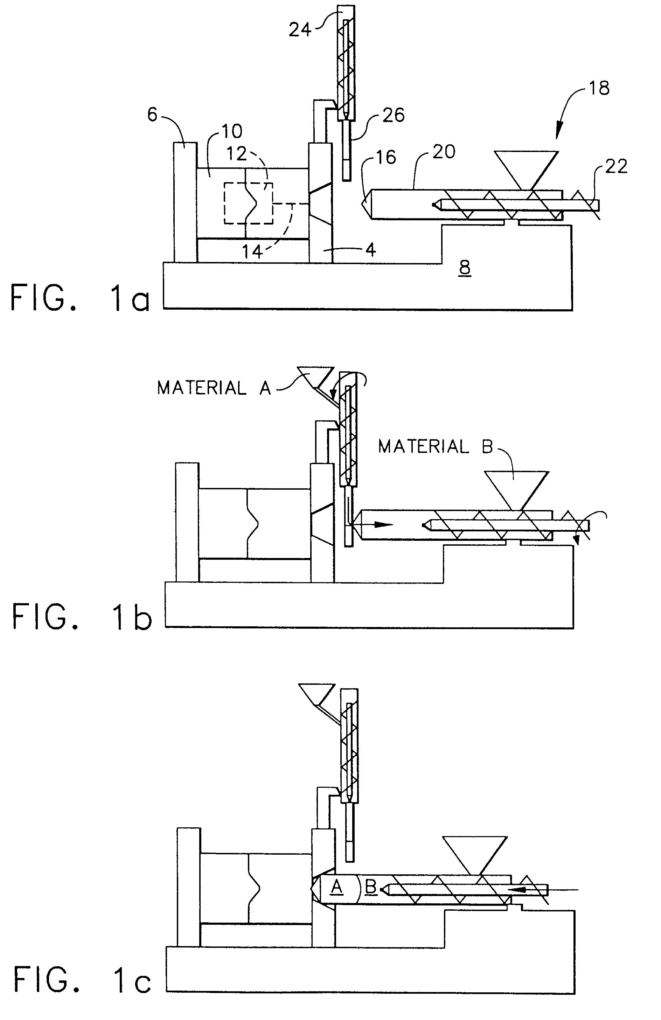

Die Figur 1 zeigt ein zweiteiliges Formwerkzeug 10 mit einer Formkavität 12 zur Aufnahme von geschmolzenem Kunststoffmaterial aus einer Einspritzeinheit 18, um einen Kunststoffartikel mit einer Sandwich-Konfiguration herzustellen. Die beiden Teile des Formwerkzeugs 10 sind an einer stationären Platte 4 und einer beweglichen Formaufspannplatte 6 montiert. Die stationäre Formaufspannplatte 4, die bewegliche Formaufspannplatte 8 und die Einspritzeinheit 18 sind auf einem gemeinsamen Maschinenbett 8 angeordnet. Die Formwerkzeugkonstruktion weist einen Angußkanal 14 auf, welcher mit einer Düse 16 an der Einspritzeinheit 18 verbunden ist, wenn Material in die Formkavität 12 eingespritzt wird. Die Düse 16 ist mit einer Rückströmsperre ( nicht dargestellt ) von bekannter Art ausgerüstet.

Die Haupt-Einspritzeinheit 18 weist einen Zylinder auf, mit einer Förderschnecke 23 von beim Spritzgießen typischer Art. Die Förderschnecke 22 ist so gesteuert, daß sie im Zylinder 20 hin- und herbewegbar ist, um den Kunststoff zu plastifizieren und ihn in die Form 10 einzuspritzen. Die Einspritzeinheit 18 ist mit Mitteln ausgestattet wie zum Beispiel mit einem hydraulischen Zylinder ( nicht dargestellt ), um die Einheit linear auf die Form 10 zuzubewegen bzw. sie von dieser wegzubewegen. Insbesondere wird die Einspritzeinheit 18 gegen die Form 10 zum Einspritzen bewegt, dann wird sie von der Form 10 und der stationären Formaufspannplatte 4 zurückgezogen, so daß das Haut-Material in den Zylinder 20 der Einspritzeinheit gefördert werden kann.

Eine zusätzliche Plastifiziereinheit 24 ist neben der Einspritzeinheit 18 entweder an der stationären Formaufspannplatte 4 oder dem Maschinenbett 8 montiert, was abhängig ist von der gewünschten Maschinenkonfiguration. Bevorzugt ist die zusätzliche Einheit 24 ein nicht hin- und herbewegbarer Extruder, um eine wirtschaftlichere Vorrichtung zu erreichen; es kann sich jedoch auch um eine zweite hin- und herbewegbare Schneckeneinspritzeinheit handeln, wenn dies gewünscht wird. Angeschlossen an das Ende der zusätzlichen Plastifiziereinheit 24 ist ein Heißkanalverteiler 26. Wie aus Figur 1 hervorgeht, ist die zusätzliche Einheit 24 an der stationären Formaufspannplatte 4 montiert, so daß sie entlang einer Linie bewegbar ist, die senkrecht ist zur Einspritzeinheit 18. Diese Orientierung der zusätzlichen Einheit 24 erleichtert ihre Positionierung, so daß der Heißkanalverteiler 26 sauber vor der Einspritzeinheit 18 fluchtet, wodurch eine direkte Verbindung mit der Düse 16 ermöglicht wird.

Ein Arbeitszyklus wird nun anhand der Ausführungsform aus Figur 1 beschrieben. Die Einspritzeinheit 18 ist in eine rückwärtige Position ( Figur 1a ) zurückgezogen, wodurch ein Freiraum zwischen der stationären Formaufspannplatte 4 und der Düse 16 entsteht. Die zusätzliche Einheit 24 wird dann nach unten bewegt, so daß der Heißkanalverteiler 26 vor der Einspritzeinheit 18 angeordnet ist. Die Düse 16 der Einspritzeinheit 18 bewegt sich dann gegen den Heißkanalverteiler 26, um eine flüssigkeitsdichte Verbindung zwischen der Einspritzeinheit 18 und der zusätzlichen Einheit 24 herzustellen. Die zusätzliche Einheit 24 wird dann aktiviert, um plastifiziertes Material über den Heißkanalverteiler 26, durch die Düse 16 in das vordere Ende des Zylinders 20 der Einspritzeinheit 18 zu fördern, wodurch die Schnecke 22 innerhalb des Zylinders nach hinten bewegt wird. Die Förderung des Haut-Materials von der zusätzlichen Einheit dauert so lange, bis ein ausreichendes Volumen, definiert durch die Spritzlings-Geometrie gefördert worden ist, (siehe Figur 1b).

Wenn die Förderung des Haut-Materials abgeschlossen ist, plastifiziert die Einspritzeinheit 18 eine ausreichende Menge des Kern-Materials durch Rotation und Zurückbewegung der Förderschnecke 22 in konventioneller Art und Weise, so daß Schmelze für einen Schuß vorbereitet ist. Gleichzeitig mit der Plastifizierungsfunktion löst sich die Einspritzeinheit 18 von der zusätzlichen Einheit 24, indem sie zurückgezogen wird. Die zusätzliche Einheit 24 bewegt sich nach oben, so daß die Einspritzeinheit 18 nun ungehindert in eine Position nach vorne bewegt werden kann, in der die Düse 16 mit dem Angußkanal 14 der Form 10 kommuniziert. Die Einspritzeinheit 18 spritzt dann den angesammelten Schuß von Kern- und Haut-Material in die Form 10 ein und zwar dadurch, daß die Förderschnecke 22 in einer für einen Einspritzprozeß typischen Art und Weise nach vorne bewegt wird.

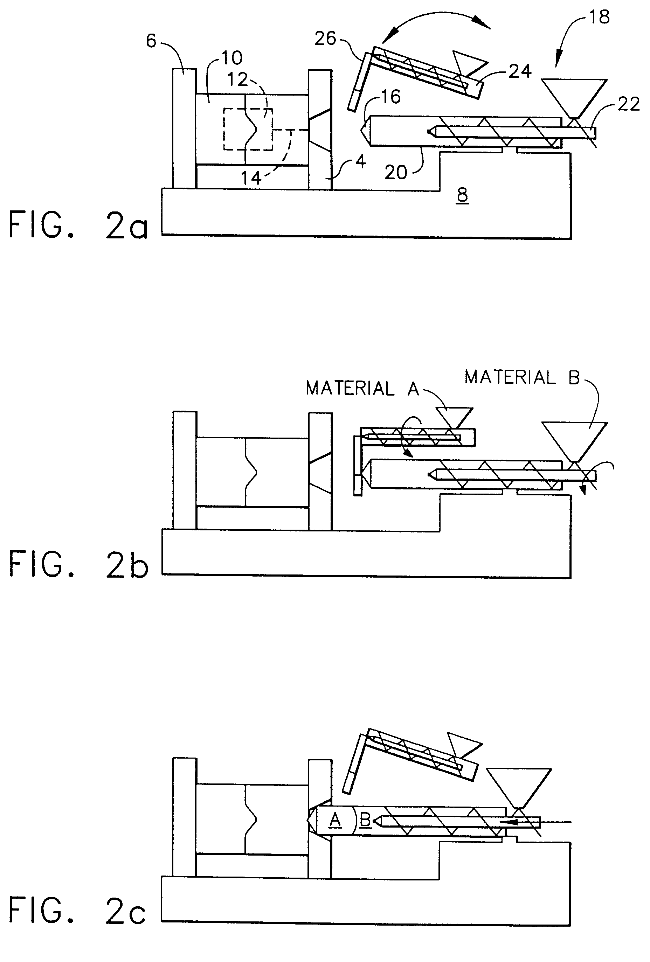

Die Vorrichtung der bevorzugten Ausführungsform in einer alternativen Konfiguration ist in Figur 2 dargestellt. Sie unterscheidet sich lediglich leicht von der Struktur, die in Figur 1 dargestellt ist. Insbesondere ist die zusätzliche Einheit 24 anstatt in vertikaler Orientierung wie in Figur 1 in einer Weise montiert, daß sie parallel zur Haupteinspritzeinheit 18 während ihrer Materialförderunktion angeordnet sein kann. Die zusätzliche Einheit 24 und der Heißkanalverteiler 26 wird von einer Position verschwenkt, in der die zusätzliche Einheit 24 und die Haupteinspritzeinheit 18 miteinander verbunden sind in eine Position, die der Haupteinspritzeinheit 18 genügend Platz gibt, wenn sie zurück und nach vorne bezüglich der stationären Formaufspannplatte 4 bewegt wird.

Demgemäß ist die Operationsweise der alternativen Vorrichtung gemäß Figur 2 sehr ähnlich der in Figur 1 gezeigten. Der Hauptunterschied liegt in der Art und Weise, wie die zusätzliche Einheit 24 und der Heißkanalverteiler 26 in und außer Position bezüglich der Haupt-Einspritzeinheit 18 bewegt wird, um die Förderung des Haut-Materials zu erlauben. Insbesondere wenn die Einspritzeinheit von der Form ( Figur 2a) zurückgezogen ist, wird die zusätzliche Einheit 24 und der Heißkanalverteiler 26 in Position verschwenkt, so daß die Düse 16 der Haupt-Einspritzeinheit 18 mit dem Heißkanalverteiler 26 verbunden ist ( Figur 2b ). Diese Verbindung ermöglicht dann die Förderung des Haut-Materials von der zusätzlichen Einheit 24 durch den Heißkanalverteiler 26 in den Zylinderraum 20 der Einspritzeinheit 18. Wenn genügend Material gefördert worden ist, werden Heißkanalverteiler 26 und die zusätzliche Einheit 24 in die Freigabeposition verschwenkt, und die Haupt-Einspritzeinheit plastifiziert und gewünschte Menge Kern-Material, während sie in die Position an die Form heranbewegt wird ( Figur 2c ). Sobald die vollständige Schmelzeladung angesammelt worden ist, ist die Einspritzeinheit 18 bereit, die geschichtete Kunststoffschmelze in die Formkavität 12 einzuspritzen, wobei die gewünschte Sandwich-Konfiguration des gespritzten Artikels geformt wird.

Sowohl mit der Vorrichtung gemäß Figur 1 als auch mit der gemäß Figur 2 beinhaltet der Einspritzzyklus Zeit zum Füllen und Packen der Formkavität 12. Sobald das Material im Angußkanal 14 ausreichend erstarrt ist, wird die Einspritzeinheit 18 zurückgezogen, so daß der Heißkanalverteiler 26 wie oben beschrieben verbunden werden kann, um die Förderung des Haut-Materials in die Einspritzeinheit 18 zu ermöglichen und Material für den Schuß des nächsten Zyklusses aufzubauen. Selbstverständlich für Spritzgießfachleute überlappen sich verschiedene Teile des Operationszyklus, um die totale Zykluszeit zu minimieren. Zum Beispiel würde, nachdem das Haut-Material von der zusätzlichen Einheit 24 in die Einspritzeinheit 18 gefördert worden ist, die Plastifizierung des Kern-Materials gleichzeitig mit dem Zurückziehen des Heißkanalverteilers 26 und die nachfolgende Bewegung der Einspritzeinheit 18 auf die Form 10 zu passieren. Es ist klar, daß in den meisten Fällen die notwendigen Funktionen in ausreichender Weise einander überlappen, so daß die Totzeit innerhalb des Zyklus ausgeschlossen oder zumindest minimal ist.

## Patentansprüche

1. Vorrichtung zum Spritzgießen eines Kunststoffartikels in einer Formkavität, wobei der spritzgegossene Artikel eine Sandwich-Schichtkonfiguration aufweist, welche eine äußere Oberfläche eines Haut-Materials aufweist, das ein inneres Kern-Material umgibt, mit einer Haupt-Einspritzeinheit (18), die eine hin- und herbewegbare Förderschnecke (22) zur Plastifizierung des Kern-Materials aufweist, einer zusätzlichen Einheit (24) zur Plastifizierung des Haut-Materials, und einem Heißkanalverteiler (26), welcher mit der zusätzlichen Einheit (24) verbunden ist,
dadurch gekennzeichnet,
daß Mittel zur alternativen Positionierung des Heißkanalverteilers (26) zwischen einer ersten Position, in der der Heißkanalverteiler mit der Hauptspritzeinheit (18) verbunden ist, und einer zweiten Position, in der der Heißkanalverteiler (28) aus dem Mündungsbereich der Haupt-Einspritzeinheit (18) herausbewegt ist, vorgesehen sind.

2. Vorrichtung nach Anspruch 1,
dadurch gekennzeichnet,
daß die zusätzliche Einheit (24) in einem Winkel von 90° zur Haupt-Einspritzeinheit angeordnet ist und entlang einer Linie bewegbar ist, die senkrecht ist zur Haupt-Einspritzeinheit (18).

3. Vorrichtung nach Anspruch 1,
dadurch gekennzeichnet,
daß die zusätzliche Einheit (24) verschwenkbar angeordnet ist derart, daß der Heißkanalverteiler (26) mit der Düse der Haupt-Einspritzeinheit (18) verbunden ist und einer zweiten Position, in der er aus dem Mündungsbereich der Haupt-Einspritzeinheit (18) herausgeschwenkt ist.

4. Vorrichtung nach einem der Ansprüche 1 bis 3,
dadurch gekennzeichnet,
daß separate Speichermittel zur Aufnahme einer Menge von Haut-Material und zum Einspritzen des Haut-Materials in die Formkavität (12) vorgesehen sind, nachdem die Haupt-Einspritzeinheit (18) den Einspritzvorgang in die Formkavität (12) abgeschlossen hat.

5. Vorrichtung nach Anspruch 4,
dadurch gekennzeichnet,
daß das Speichermittel das Haut-Material direkt von der zusätzlichen Einheit (24) erhält.

6. Vorrichtung nach Anspruch 4,
dadurch gekennzeichnet,
daß das Speichermittel das Haut-Material von dem Materialfluß erhält, der von der Haupt-Einspritzeinheit (18) in die Formkavität (12) verläuft.

## Claims

1. A device for injection moulding an article made of plastics material in a mould cavity, the injection moulded article having a sandwich-type layered configuration which has an outer surface of a skin material surrounding an inner core material, having a main injection unit (18) which has a transport screw (22), which may be moved to and fro, for plasticising the core material, an additional unit (24) for plasticizing the skin material, and a heat-distributing channel (26) which is connected to the additional unit (24), characterized in that means are provided for positioning the heat-distributing channel (26) alternatively between a first position in which the heat-distributing channel is connected to the main injection unit (18) and a second position in which the heat-distributing channel (28) [sic] is moved out of the orifice region of the main injection unit (18).

2. A device according to Claim 1, characterized in that the additional unit (24) is arranged at an angle of 90° to the main injection unit and may be moved along a line which is perpendicular to the main injection unit (18).

3. A device according to Claim 1, characterized in that the additional unit (24) is pivotally arranged such that the heat-distributing channel (26) is connected to the nozzle of the main injection unit (18) and a second position in which it is pivoted out of the orifice region of the main injection unit (18).

4. A device according to one of Claims 1 to 3, characterized in that separate storage means are provided for receiving a quantity of skin material and for injecting the skin material into the mould cavity (12) after the main injection unit (18) has completed the procedure of injecting into the mould cavity (12).

5. A device according to Claim 4, characterized in that the storage means receives the skin material directly from the additional unit (24).

6. A device according to Claim 4, characterized in that the storage means receives the skin material from the flow of material which runs from the main injection unit (18) into the mould cavity (12).

## Revendications

1. Dispositif de moulage par injection d'un article en matière plastique dans une cavité de moule, l'article moulé par injection présentant une configuration stratifiée en sandwich qui comporte une surface extérieure d'une matière de peau, laquelle entoure une matière intérieure de coeur, comprenant une unité principale d'injection (18) munie d'une vis d'alimentation mobile en va-et-vient (22) pour plastifier la matière de coeur, une unité supplémentaire (24) pour plastifier la matière de peau, et un répartiteur de canaux chauffants (26) qui est relié à l'unité supplémentaire (24), caractérisé en ce que des moyens sont prévus pour positionner alternativement le répartiteur de canaux chauffants (26) entre une première position, dans laquelle le répartiteur de canaux chauffants est relié à l'unité principale d'injection (18), et une seconde position, dans laquelle le répartiteur de canaux chauffants (28) est sorti de la zone débouchante de l'unité principale d'injection (18).

2. Dispositif selon la revendication 1, caractérisé en ce que l'unité supplémentaire (24) est disposée selon un angle de 90° par rapport à l'unité principale d'injection et peut être déplacée suivant un axe perpendiculaire à l'unité principale d'injection (18).

3. Dispositif selon la revendication 1, caractérisé en ce que l'unité supplémentaire (24) est montée pivotante, de façon que le répartiteur de canaux chauffants (26) soit relié dans une première position à la filière de l'unité principale d'injection (18) et dans une seconde position, soit sorti de la zone débouchante de l'unité principale d'injection (18).

4. Dispositif selon l'une des revendications 1 à 3, caractérisé en ce que des moyens d'accumulation séparés sont prévus pour recevoir une quantité de matière de peau et pour injecter la matière de peau dans la cavité de moule (12) lorsque l'unité principale d'injection (18) a terminé l'opération d'injection dans la cavité de moule (12).

5. Dispositif selon la revendication 4, caractérisé en ce que le moyen d'accumulation reçoit la matière de peau directement de l'unité supplémentaire (24).

6. Dispositif selon la revendication 4, caractérisé en ce que le moyen d'accumulation reçoit la matière de peau a partir du flux de matière qui s'écoule de l'unité principale d'injection (18) vers la cavité de moule (12).
